# DEMANDE DE BREVET EUROPEEN

(11) **EP 4 834 756 A1**
(43) Date de publication de la demande: **04.11.2026**
(21) Numéro de dépôt: 26150503.6
(22) Date de dépôt: 07.01.2026
(51) Int. Cl.: B64C 27/06, B64C 27/12, B64D 31/06, B64D 31/09, B64D 35/08, F02C 9/42, F02C 9/44

(54) **GIRAVION ET PROCEDE DE REGULATION D'UNE VITESSE DE ROTATION VARIABLE D'UN ROTOR**

(30) Priorité: 28.04.2025 FR 2504456
(71) Demandeur: Airbus Helicopters, 13725 Marignane Cedex (FR)
(72) Inventeur: CERQUEIRA, Stéphane, 13510 EGUILLES (FR)
(74) Mandataire: GPI Brevets

(57) **Abrégé**

La présente invention concerne un procédé de régulation d'une vitesse de rotation d'un rotor (5) d'un giravion (1) ayant au moins deux moteurs (10), le giravion (1) comportant un système de régulation (55) qui régule chaque moteur (10) en fonction d'au moins une vitesse de consigne à atteindre par le rotor (5). Lors d'un mode de fonctionnement asymétrique, le procédé comporte : i) détermination avec le système de régulation (55) de la vitesse de consigne en appliquant une loi alternative qui réhausse la vitesse de consigne par rapport à une loi par défaut applicable durant un mode collaboratif, en présence d'une vitesse d'avancement supérieure à un premier seuil.

## Description

La présente invention concerne un giravion et un procédé de régulation d'une vitesse de rotation variable d'un rotor.

Un giravion peut comporter une installation motrice mettant en mouvement un rotor formant une voilure tournante. Par exemple, un hélicoptère comporte au moins un rotor principal participant à sa sustentation, voire à sa propulsion.

L'installation motrice peut comprendre plusieurs moteurs à combustion, dit aussi plus simplement « moteur », mettant en mouvement un système mécanique qui entraîne en rotation le rotor. Par exemple, les moteurs sont reliés mécaniquement à une boite de transmission de puissance mettant en mouvement le rotor.

Un tel moteur peut être un turbomoteur comportant un générateur de gaz et au moins une turbine de travail mettant en mouvement un arbre de sortie du turbomoteur. Cet arbre de sortie est alors connecté mécaniquement au système mécanique.

Selon un autre aspect, le giravion comporte un système de régulation qui a pour fonction principale de piloter, via le débit carburant, la puissance motrice délivrée par chaque moteur. Ce système de régulation peut avoir pour objectif de maintenir la vitesse de rotation du rotor d'un giravion égale à une valeur de consigne prédéterminée. Un tel système de régulation comporte usuellement un calculateur moteur et un doseur de carburant par moteur, et des senseurs divers.

Par exemple, un hélicoptère est notamment piloté en agissant sur le pas des pales d'un rotor principal. Une augmentation de ce pas tend à entraîner une décélération du mouvement de rotation du rotor principal, l'augmentation du pas entraînant en outre une augmentation de la portance du rotor principal, mais aussi de la traînée aérodynamique de ce rotor principal. Pour éviter que la vitesse de rotation du rotor principal ne soit réduite indûment, la puissance générée par les moteurs doit alors augmenter de manière à maintenir sensiblement constante la vitesse de rotation du rotor principal. De la même façon, lors de la baisse du pas des pales, il faut diminuer la puissance délivrée par les moteurs.

De plus, la régulation du débit carburant doit être contrôlée pour par exemple éviter un pompage ou une extinction d'un moteur.

Par exemple, des senseurs mesurent la première vitesse de rotation NTL de la turbine de travail d'un turbomoteur. Dès lors, une première valeur, correspondant à la valeur que doit avoir la première vitesse de rotation NTL pour que la vitesse de rotation du rotor soit égale à sa consigne, est déterminée. De ce fait, si la première vitesse de rotation NTL est différente de cette première valeur, le calculateur génère des ordres afin d'accélérer ou décélérer le moteur pour obtenir la vitesse de rotation de consigne du rotor principal. Dans ces conditions, un calculateur moteur détermine une deuxième valeur, par exemple en faisant appel à des lois d'anticipation basées sur le pas collectif des pales du rotor principal. Cette deuxième valeur correspond à la valeur que doit atteindre la deuxième vitesse de rotation NG des organes mobiles du générateur de gaz du turbomoteur pour que la première vitesse de rotation NTL soit égale à la première valeur.

Un système de régulation d'un giravion peut être mis en œuvre pour obtenir une vitesse de rotation du rotor variable. En effet, une variation significative de la vitesse de rotation NR d'un rotor est exploitée, par exemple, pour réduire les nuisances sonores à proximité du sol et/ou améliorer les performances. A titre indicatif, la vitesse de rotation du rotor principal peut être commandée pour être variable selon une plage de valeurs potentiellement comprise entre 90% et 110% d'une vitesse de référence.

En particulier, une loi connue de variation de la vitesse de rotation NR d'une voilure tournante peut spécifier une vitesse de consigne NR* égale à une vitesse maximale, par exemple de l'ordre de 105% de la vitesse de référence lorsque l'aéronef présente une vitesse air inférieure à un premier seuil. Ce premier seuil est par exemple de l'ordre de 50 nœuds (kts, un nœud valant 1,852 kilomètres par heure). Cette caractéristique vise à optimiser les performances à basse vitesse, et notamment lorsque le giravion est dans une position stationnaire.

En outre, cette loi connue définit une vitesse de consigne NR* égale à une vitesse minimale, par exemple de l'ordre de 90% de la vitesse de référence, lorsque l'aéronef présente une vitesse air supérieure à un deuxième seuil. Ce deuxième seuil est par exemple de l'ordre de 75 nœuds. Cette caractéristique permet notamment de limiter les efforts exercés sur les ensembles dynamiques à haute vitesse, et/ou de limiter les nuisances sonores.

Enfin, cette loi connue définit une décroissance linéaire de cette vitesse de consigne NR* de la vitesse maximale à la vitesse minimale lorsque l'aéronef présente une vitesse air qui croît du premier seuil jusqu'au deuxième seuil.

Eventuellement, la vitesse minimale varie en fonction de l'altitude pour optimiser la performance de l'aéronef et/ou éviter d'atteindre avec les moteurs des régimes rotors faibles à haute altitude, les performances du moteur étant moins bonnes à bas régime. Par exemple, la loi de régulation peut comporter une pluralité d'équations associées chacune à une plage d'altitudes.

Sur un giravion conventionnel, une installation motrice multimoteur fonctionne, hors cas de panne, selon un mode de fonctionnement coopératif durant lequel les moteurs génèrent chacun une puissance motrice contribuant conjointement à mettre en mouvement le système mécanique. Une telle loi de régulation de la vitesse de rotation NR est alors particulièrement efficace.

En revanche, une installation motrice peut éventuellement fonctionner selon un mode de fonctionnement asymétrique en mettant en veille au moins un des moteurs à combustion. Sur un giravion bimoteur, lors du mode de fonctionnement asymétrique, un moteur actif est régulé pour assurer la mise en rotation d'un rotor en transmettant au rotor, avec son arbre de puissance, une puissance motrice non nulle. Un moteur passif est en revanche en veille afin de ne pas transmettre une puissance motrice au rotor.

Un moteur en veille peut être arrêté en ayant une chambre de combustion éteinte. La chambre de combustion du moteur passif n'est alors plus alimentée en carburant, et sur un turbomoteur, les organes tournants du générateur de gaz peuvent être ou ne pas être mis en mouvement par une machine électrique. Alternativement, un moteur en veille peut fonctionner à un régime de ralenti ou de super-ralenti, en ayant une chambre de combustion allumée et alimentée en carburant, le moteur en veille fonctionnant à très faible vitesse de rotation et ne transmettant cependant aucune puissance à la voilure tournante, le ou les moteurs actifs assurant l'intégralité de la fourniture de puissance. Par exemple, le moteur passif est dans un régime de ralenti en ayant une vitesse de rotation de l'ordre de 40% de sa vitesse nominale.

Sur un giravion bimoteur, si le moteur actif tombe en panne alors le giravion se trouve dans une phase d'autorotation non motorisée durant le laps de temps nécessaire pour réactiver le moteur en veille. Pendant ce laps de temps, le pilote baisse le pas des pales de la voilure tournante pour limiter la chute de la vitesse de rotation NR de la voilure tournante et atteindre une vitesse de consigne.

Les documents FR3061142 et FR3027124 sont connus, mais sont éloignés de cette problématique. Le document FR3061142 décrit un dispositif de régulation de la vitesse de rotation d'un arbre d'un générateur de gaz de turbomoteur de giravion. Le document FR3027124 décrit une méthode de régulation sous conditions givrantes de la vitesse d'entraînement d'un rotor de giravion.

Le document EP 3 803 082 B1 décrit une installation motrice munie d'un premier turbomoteur et d'un deuxième turbomoteur. Le premier turbomoteur est équipé d'un échangeur thermique. En contrepartie, un calculateur limite la capacité d'accélération et de décélération du premier turbomoteur pour limiter les contraintes mécaniques et thermiques exercées sur l'échangeur thermique. Le premier turbomoteur peut être utilisé à un niveau de puissance quasi constant pour fournir une partie de l'énergie propulsive nécessaire à un aéronef. En cas de panne du premier turbomoteur, le deuxième turbomoteur prend le relais et fournit l'intégralité de la puissance nécessaire. En cas de panne du deuxième turbomoteur, la capacité d'accélération et de décélération du premier turbomoteur n'est plus limitée.

Les documents US 2022/306308 A1, US 2020/ 362754 A1, et US 2022/106913 A1 sont aussi connus.

La présente invention a alors pour objet de proposer un procédé et un giravion innovants pour optimiser cette phase d'autorotation faisant suite à la panne du moteur actif lors de l'application du mode de fonctionnement asymétrique.

L'invention vise ainsi un procédé de régulation d'une vitesse de rotation d'un rotor d'un giravion. Le giravion comprend une installation motrice ayant au moins deux moteurs et une chaîne de transmission de puissance entraînant en rotation le rotor, chaque moteur ayant un ensemble de puissance connecté à la chaîne de transmission de puissance, le giravion comportant un système de régulation qui régule chaque moteur en fonction d'au moins une vitesse de consigne à atteindre par le rotor, le système de régulation régulant lors d'un mode de fonctionnement asymétrique à un régime actif au moins un moteur actif parmi les au moins deux moteurs et mettant en veille au moins un moteur passif parmi les au moins deux moteurs. Le système de régulation régule à un régime actif lesdits moteurs lors d'un mode de fonctionnement collaboratif, le système de régulation déterminant lors du mode de fonctionnement collaboratif ladite au moins une vitesse de consigne en appliquant une loi par défaut donnant ladite vitesse de consigne en fonction au moins d'une vitesse d'avancement du giravion, ladite vitesse de consigne étant égale à une valeur minimale lorsque ladite vitesse d'avancement est supérieure à un premier seuil.

Lors du mode de fonctionnement asymétrique, le procédé comporte : i) détermination avec le système de régulation de la vitesse de consigne en appliquant une loi alternative générant une vitesse de consigne supérieure à la vitesse de consigne générée par la loi par défaut en présence d'une vitesse d'avancement supérieure au premier seuil et à la même altitude, et ii) régulation dudit moteur actif pour atteindre la vitesse de consigne.

En particulier, chaque moteur peut être un turbomoteur, chaque ensemble de puissance comprenant au moins une turbine de détente et au moins un arbre de puissance.

Selon un exemple, le système de régulation peut déterminer la vitesse de consigne à atteindre par le rotor, et en déduit une vitesse de rotation cible à atteindre par un organe de chaque ensemble de puissance. Le système de régulation régule alors les moteurs de manière usuelle.

Par ailleurs, le système de régulation applique une loi par défaut lors du mode de fonctionnement collaboratif, cette loi par défaut étant au moins fonction de la vitesse d'avancement de l'aéronef voire aussi de son altitude. Chaque moteur est commandé pour fonctionner selon un régime actif afin de produire une puissance motrice participant à la mise en rotation du rotor afin que la vitesse de consigne soit atteinte.

Lorsque le mode de fonctionnement collaboratif est engagé, tous les moteurs développent donc une puissance motrice. La panne d'un des moteurs est compensée par l'autre moteur. Dès lors, la vitesse de rotation du rotor est peu, voire pas, impactée par la panne d'un moteur, même à haute vitesse quand la vitesse de consigne est minimisée.

En revanche, lors du mode de fonctionnement asymétrique, le système de régulation régule à un régime actif au moins un moteur actif parmi les au moins deux moteurs à combustion et met en veille au moins un moteur passif parmi les au moins deux moteurs à combustion, le moteur actif développant avec son arbre de puissance une puissance motrice non nulle participant à la mise en rotation du rotor, le moteur passif ne transmettant aucune puissance au rotor.

Lorsque le mode de fonctionnement asymétrique est actif, le rotor est donc mis en mouvement par le ou les rotors actifs, et en particulier par un seul moteur actif sur un aéronef bimoteur. Si le moteur actif tombe en panne, le rotor n'est plus mis en rotation par un moteur durant le laps de temps court mais nécessaire pour réactiver le moteur passif. Dès lors, le pilote engage une procédure d'autorotation pour limiter la baisse de la vitesse de rotation du rotor le temps que le moteur passif soit réactivé. Or, à haute vitesse, la loi par défaut requiert de manière conventionnelle une régulation de la vitesse de rotation du rotor à une vitesse minimale. Dès lors, la vitesse de rotation du rotor peut se rapprocher d'une limite basse acceptable durant le laps de temps nécessaire pour réactiver le moteur passif.

L'invention permet de remédier à ce problème. En effet, quand le mode de fonctionnement asymétrique est actif et à haute vitesse d'avancement, alors la vitesse de consigne à atteindre est supérieure, dans au moins une plage d'altitudes, à la vitesse de consigne à atteindre quand le mode de fonctionnement collaboratif est actif et dans les mêmes conditions, à savoir à la même vitesse et à la même altitude. Par suite, la loi alternative permet d'obtenir une plus grande marge par rapport à la vitesse de rotation limite admissible pour le rotor quand le mode de fonctionnement asymétrique est activé.

Dès lors, ce procédé permet de conserver les avantages liés à l'utilisation d'une loi par défaut usuelle durant le mode de fonctionnement collaboratif, tout en garantissant une marge de sécurité suffisante lorsque le mode de fonctionnement asymétrique est actif.

Le procédé peut de plus comporter une ou plusieurs des caractéristiques qui suivent, prises seules ou en combinaison.

Selon une possibilité, pour une vitesse d'avancement inférieure à un deuxième seuil, le deuxième seuil étant inférieur au premier seuil, la vitesse de consigne peut être égale à une même valeur maximale selon la loi par défaut et la loi alternative.

La valeur maximale est supérieure à la valeur consigne atteinte en présence d'une vitesse d'avancement supérieure au premier seuil, aussi bien avec la loi par défaut qu'avec la loi alternative. Autrement dit, à basse vitesse la loi par défaut et la loi alternative fournissent la même valeur maximale pour la vitesse de consigne. Cette caractéristique vise à atteindre la même valeur maximale, notamment pour obtenir les performances requises durant une phase de vol stationnaire.

Selon une possibilité compatible avec les précédentes, pour une vitesse d'avancement supérieure au premier seuil, la vitesse de consigne peut être égale une valeur minimale selon la loi par défaut et la loi alternative, la valeur minimale prenant une première valeur selon la loi par défaut et une deuxième valeur selon la loi alternative, la deuxième valeur étant supérieure à la première valeur à une même altitude.

La première valeur et la deuxième valeur sont toutes deux inférieures à la valeur maximale précitée. Ainsi, la vitesse de consigne prend à haute vitesse une valeur minimale qui est plus élevée, dans des conditions identiques à savoir pour une même altitude, lors de l'application du mode fonctionnement asymétrique que lors du mode fonctionnement collaboratif.

Eventuellement, lesdites première valeur et deuxième valeur peuvent varier en fonction de l'altitude.

Cette caractéristique permet d'optimiser le fonctionnement de l'installation motrice en prenant en considération l'altitude. Cette altitude peut être une altitude-densité ou une altitude-pression. L'altitude-densité correspond à l'altitude-pression corrigée de l'effet de la température. L'altitude-pression est calculée de manière usuelle à partir par exemple de la pression atmosphérique, mesurée avec un baromètre ou autres. En revanche, l'altitude-densité est calculée de manière usuelle à partir par exemple de la pression atmosphérique, mesurée avec un baromètre ou autres, et d'une température mesurée avec un thermocouple ou autres capteurs de température.

Selon une possibilité compatible avec les précédentes :
- lorsque le mode de fonctionnement asymétrique est activé, le procédé peut comporter une régulation du moteur actif en faisant varier linéairement la vitesse de consigne de la première valeur à la deuxième valeur, et
- lorsque le mode de fonctionnement asymétrique est désactivé, le procédé peut comporter une régulation des moteurs en faisant varier linéairement la vitesse de consigne de la deuxième valeur à la première valeur.

Ces caractéristiques permettent d'obtenir une transition optimisée lors du passage du mode de fonctionnement collaboratif au mode de fonctionnement asymétrique, et inversement.

Selon une possibilité compatible avec les précédentes pour une vitesse d'avancement supérieure ou égale au deuxième seuil et inférieure ou égale au premier seuil, la vitesse de consigne peut décroître linéairement de la valeur maximale à la valeur minimale selon la loi par défaut et la loi alternative.

Outre, un procédé, l'invention vise un giravion, ledit giravion comprenant une installation motrice ayant au moins deux moteurs et une chaîne de transmission de puissance entraînant en rotation le rotor, chaque moteur ayant un ensemble de puissance connecté à la chaîne de transmission de puissance, le giravion comportant un système de régulation qui régule chaque moteur en fonction d'au moins une vitesse de consigne à atteindre par le rotor, le système de régulation régulant lors d'un mode de fonctionnement asymétrique à un régime actif au moins un moteur actif parmi les au moins deux moteurs et mettant en veille au moins un moteur passif parmi les au moins deux moteurs, le système de régulation régulant à un régime actif lesdits moteurs lors d'un mode de fonctionnement collaboratif, le système de régulation déterminant lors du mode de fonctionnement collaboratif ladite au moins une vitesse de consigne en appliquant une loi par défaut donnant ladite vitesse de consigne en fonction au moins d'une vitesse d'avancement du giravion, ladite vitesse de consigne étant égale à une valeur minimale lorsque ladite vitesse d'avancement est supérieure à un premier seuil.

Le système de régulation est configuré pour mettre en œuvre le procédé de l'invention.

Selon une possibilité, le système de régulation peut comporter un senseur de vitesse mesurant une vitesse d'avancement du giravion.

Par exemple, le senseur de vitesse peut mesurer la vitesse air vrai dite aussi « True air speed » en langue anglaise, ou une vitesse sol.

Selon une possibilité, le système de régulation peut comporter un senseur d'altitude mesurant une altitude.

Le terme senseur utilisé par la suite peut désigner un ensemble comprenant un ou plusieurs capteurs, voire un calculateur.

Ainsi, le senseur d'altitude peut comprendre un baromètre pour évaluer une altitude-pression ou un baromètre et un thermocouple ou un autre type de capteur de température pour évaluer une altitude-densité.

L'invention et ses avantages apparaîtront avec plus de détails dans le cadre de la description qui suit avec des exemples donnés à titre illustratif en référence aux figures annexées qui représentent :
la figure 1, un schéma illustrant un giravion selon l'invention,
la figure 2, un diagramme illustrant le procédé de l'invention, et
la figure 3, un diagramme illustrant le procédé de l'invention.

Les éléments présents dans plusieurs figures distinctes sont affectés d'une seule et même référence.

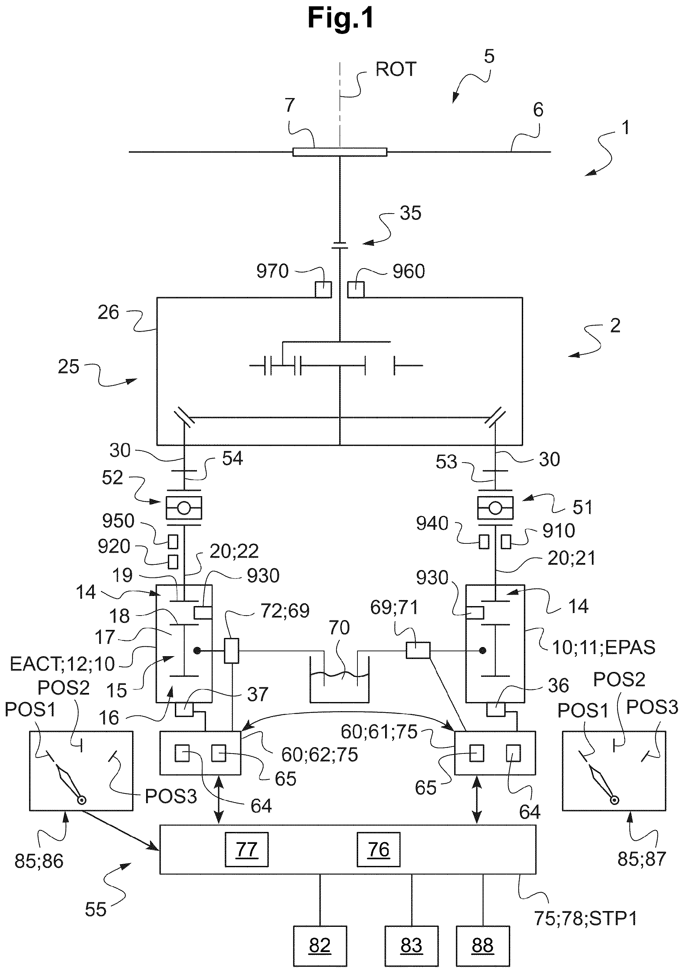

La figure 1 présente un exemple de giravion 1 selon l'invention. Ce giravion 1 comporte un rotor 5. Ce rotor 5 est muni d'une pluralité de pales 6 mobiles en rotation autour d'un axe ROT par rapport à un fuselage et éventuellement portées par un moyeu 7 ou équivalent. Par exemple, le rotor 5 forme une voilure tournante.

Le giravion 1 comporte une installation motrice 2 pour mettre en rotation le rotor 5. Cette installation motrice 2 est pourvue d'au moins deux moteurs 10. La référence 10 désigne n'importe quel moteur, les références 11, 12 désignant des moteurs particuliers si besoin.

Selon un exemple, au moins un moteur 10 peut être un turbomoteur. Un tel turbomoteur 10 comporte un générateur de gaz 15 qui est muni d'au moins une turbine de compression 16, d'au moins une chambre de combustion 17 dans laquelle est injecté le carburant et d'au moins une turbine de détente 18 liée en rotation à la ou aux turbines de compression 16. De plus, le turbomoteur 10 peut comporter un ensemble de puissance 14 ayant au moins une turbine de travail 19 qui met en mouvement directement ou indirectement un arbre de puissance 20 du moteur 10. La référence 20 désigne n'importe quel arbre de puissance, les références 21, 22 désignant des arbres de puissance particuliers respectivement des deux moteurs 11 12.

Indépendamment du type des moteurs, chaque moteur 10 comporte donc un ensemble de puissance 14 connecté à une chaîne de transmission de puissance 25. La chaîne de transmission de puissance 25 est alors reliée de manière usuelle au rotor 5.

A titre illustratif, la chaîne de transmission de puissance 25 peut être munie d'une boîte de transmission de puissance 26 qui est mécaniquement interposée entre les moteurs 10 et le rotor 5. La boîte de transmission de puissance 26 peut être munie d'un arbre d'entrée 30 par moteur 10 et d'engrenages divers agencés entre les arbres d'entrée 30 et un mât rotor 35 solidaire du moyeu 7.

La chaîne de transmission de puissance 25 peut comprendre au moins une roue libre 51, 52, par exemple entre chaque moteur 10 et la boîte de transmission de puissance 26, et/ou au moins un arbre de liaison 53, 54, et/ou au moins un connecteur autorisant des désalignements... La littérature décrit diverses boîtes de transmission de puissance et diverses chaînes mécaniques, l'exemple décrit étant donné uniquement à titre illustratif.

Par ailleurs, les moteurs 10 sont des moteurs à combustion fonctionnant avec du carburant et pouvant être démarrés par des démarreurs 36, 37. Dès lors, le giravion 1 comporte un système de régulation 55 pour piloter les démarreurs 36, 37 et la puissance délivrée par chaque moteur 10 avec son arbre de puissance 20.

Ainsi, le système de régulation 55 comporte un doseur de carburant 69 par moteur 10. Chaque moteur 10 est alors relié via son propre doseur de carburant 69 à au moins un réservoir de carburant 70. La référence 69 désigne n'importe quel doseur de carburant, les références 71, 72 désignant des doseurs de carburant particuliers respectivement des deux moteurs 11 12.

Le système de régulation 55 peut comporter une unité de régulation par moteur 10, telle qu'un FADEC (d'après l'acronyme anglais signifiant « Full Authority Digital Engine Control »). Chaque unité de régulation comporte un calculateur moteur 60 par moteur 10. Chaque calculateur moteur 60 peut comprendre une unité de traitement. Une telle unité de traitement peut avoir par exemple, au moins un processeur 64 et au moins une mémoire 65, au moins un circuit intégré, au moins un système programmable, au moins un circuit logique, ces exemples ne limitant pas la portée donnée à l'expression « unité de traitement ». Les calculateurs moteurs 60 peuvent communiquer entre eux par des liaisons filaires ou non filaires.

Selon l'exemple décrit, le système de régulation 55 comporte deux calculateurs moteur 61, 62 contrôlant respectivement deux moteurs 11, 12. Chaque calculateur moteur 60 est configuré pour piloter le moteur 10 associé et le faire fonctionner selon le régime requis. Chaque calculateur moteur 61, 62 peut notamment contrôler le doseur de carburant 71, 72 de ce moteur 11, 12. Chaque calculateur moteur 61,62 peut être relié à de multiples senseurs pour contrôler le moteur 11,12 associé, tels que par exemple un senseur de température 930 mesurant la température de gaz par exemple à l'entrée d'une turbine , un senseur de vitesse mesurant par exemple la vitesse de rotation du générateur de gaz 15 du turbomoteur 10, un couplemètre 910, 920 mesurant un couple moteur sur un organe tournant de l'ensemble de puissance, un senseur de vitesse 940, 950 mesurant par exemple la vitesse de rotation de cet organe tournant, un couplemètre 960 mesurant un couple exercé sur le mât rotor 35, un senseur de vitesse 970 mesurant par exemple la vitesse de rotation de ce mât rotor 35, un senseur mesurant la pression extérieure, un senseur mesurant la température extérieure...

Par senseur, on entend ici un capteur physique capable de mesurer directement le paramètre en question, mais aussi un système pouvant comprendre un ou plusieurs capteurs physiques ainsi que des moyens de traitement du signal permettant de fournir une estimation du paramètre à partir des mesures fournies par ces capteurs physiques. De manière similaire, on désignera par mesure de ce paramètre aussi bien une mesure brute d'un capteur physique qu'une mesure obtenue par un traitement de signal plus ou moins complexe à partir de mesures brutes.

Les calculateurs moteurs 60 peuvent former un contrôleur 75 appliquant le procédé de l'invention, ou un calculateur de gestion 78 du système de régulation 55 peut faire office de contrôleur 75.

Le cas échéant, le calculateur de gestion 78 peut être un calculateur connu sous l'acronyme AMC et l'expression anglaise « Aircraft Management Computer ». Le calculateur de gestion 78 peut comprendre par exemple au moins une unité de traitement. Le calculateur de gestion 78 peut communiquer par des liaisons filaires ou non filaires avec chaque calculateur moteur 60. Le calculateur de gestion 78 peut communiquer avec chacun des systèmes de mesure précités, directement ou via un calculateur moteur 60.

En outre, le contrôleur 75 peut communiquer avec au moins une interface homme-machine de pilotage 85, voire avec une interface homme-machine de pilotage 85 par moteur 10, soit deux interfaces 86, 87 selon l'exemple donné. Chaque interface homme-machine de pilotage 85 peut par exemple émettre un signal porteur d'un ordre d'arrêt, d'un ordre de mise au régime de ralenti ou d'un ordre de mise à un régime de vol du moteur 10 concerné. La figure 1 illustre des interfaces à trois positions arrêt POS1/ ralenti POS2/vol POS 3 à cet effet.

En outre, le contrôleur 75 peut communiquer avec une interface homme-machine de commande 88 qui est manipulable pour activer, voire désactiver manuellement, le mode de fonctionnement asymétrique.

Chaque interface homme-machine 85, 88 peut comprendre un organe manœuvrable par un pilote, tel qu'un bouton ou un levier par exemple, un écran tactile, une commande vocale... Selon l'exemple illustré, les interfaces homme-machine 85, 88 communiquent avec le calculateur de gestion 78. De manière alternative ou complémentaire, les interfaces homme-machine 85, 88 communiquent avec un, voire chaque, calculateur moteur 60.

Par ailleurs, le contrôleur 75 peut communiquer, directement ou indirectement avec un ou plusieurs des senseurs suivants :
- un senseur de vitesse 82 mesurant une vitesse d'avancement Vcur courante du giravion 1, et par exemple une vitesse air vrai ou une vitesse sol, un tel senseur de vitesse 82 pouvant comprendre un système de positionnement par satellites et/ou un système à tube de Pitot par exemple,
- un senseur d'altitude 83 mesurant une altitude, tel qu'un senseur comprenant un capteur mesurant la pression de l'air entournant le giravion 1, voire aussi un capteur de température.

Par exemple, un calculateur AMC acquiert les mesures du ou des senseurs précités, et les communiquent aux calculateurs moteurs 60.

Dans ces conditions, le système de régulation 55 est configuré pour réguler la puissance motrice développée par chaque moteur 10 en appliquant le procédé de régulation de l'invention. En particulier, le contrôleur est configuré pour appliquer le procédé de l'invention, afin que le système de régulation 55 commande le doseur de carburant 69 de chaque moteur 10 pour que le rotor 5 soit mis en mouvement à une vitesse de rotation de consigne.

A cet effet, le système de régulation 55, et en particulier le contrôleur 75, commande le doseur de carburant 69 de chaque moteur 10 pour qu'une vitesse de consigne Vcons du rotor 5 soit atteinte.

Indépendamment de cet aspect, lors d'un mode de fonctionnement collaboratif chaque moteur 10 est un moteur dit actif qui est régulé par le système de régulation 55 pour développer avec son arbre de puissance 20 une puissance motrice active non nulle participant à la mise en rotation du rotor 5. Par exemple, la première interface homme-machine de pilotage 86 est placée dans la position POS3, et transmet un signal de commande au calculateur moteur 61. De même, la deuxième interface homme-machine de pilotage 87 est placée dans la position POS3, et transmet un signal de commande au calculateur moteur 62.

Durant le mode de fonctionnement collaboratif, le procédé de régulation comporte la mesure de la vitesse d'avancement courante Vcur avec le senseur de vitesse 82, voire aussi d'une altitude de l'aéronef avec le senseur d'altitude 83.

Le contrôleur 75 détermine la vitesse de consigne Vcons en appliquant alors une loi par défaut Lawdef mémorisée fonction de la vitesse d'avancement courante Vcur voire aussi de ladite altitude. Le système de régulation régule alors tous les moteurs pour que la vitesse de rotation du rotor tende vers la vitesse de consigne Vcons.

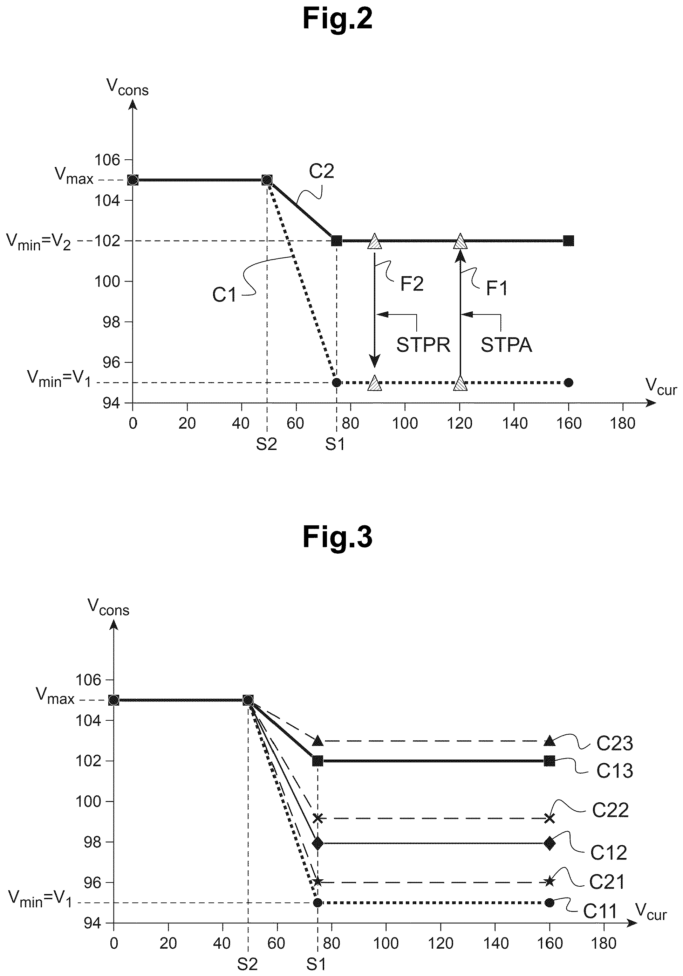

Selon l'exemple illustré, le calculateur de gestion 78 applique à chaque instant une loi de régulation pour déterminer la vitesse de consigne Vcons seulement en fonction de la vitesse d'avancement courante mesurée avec le senseur de vitesse 82 selon l'exemple de la figure 2 voire aussi en fonction de l'altitude mesurée avec le senseur d'altitude 83 selon l'exemple de la figure 3. Le calculateur de gestion 78 ou les calculateurs moteurs 60 en déduit de manière conventionnelle, par exemple à l'aide de lois de commande mémorisées, des consignes de vitesse NTL* pour la vitesse de rotation NTL de l'ensemble de puissance de chaque moteur 10. Les calculateurs moteurs 60 asservissent alors les doseurs de carburant des moteurs 10 pour faire tendre les vitesses de rotation NTL mesurées avec les senseurs de vitesse 940, 950 vers les vitesses de rotation de consigne NTL*.

Pour activer le mode de fonctionnement asymétrique, un pilote peut manœuvrer l'interface homme-machine de commande 88 durant une étape préliminaire.

Durant le mode de fonctionnement asymétrique, le système de régulation 55 maintient actif au moins un des moteurs dit « moteur actif EACT », et met en veille au moins un des moteurs dit « moteur passif EPAS ». Le ou les moteurs passifs EPAS sont alors soit arrêtés par le ou les calculateurs moteurs concernés en ayant une chambre de combustion éteinte avec éventuellement au moins un compresseur et une turbine du générateur de gaz en mouvement, soit mis au ralenti afin de ne pas transmettre une puissance motrice via la roue libre 51,52 associée.

Dès lors, le procédé de régulation comporte la mesure de la vitesse d'avancement courante Vcur avec le senseur de vitesse 82, voire aussi d'une altitude de l'aéronef avec le senseur d'altitude 83.

De plus, ce procédé comporte la détermination, durant une étape STP1 et avec le système de régulation 55, voire le contrôleur 75 et possiblement avec le calculateur de gestion 78 le cas échéant, de la vitesse de consigne Vcons en appliquant une loi alternative lawasy qui réhausse la vitesse de consigne par rapport à la loi par défaut Lawdef lorsque la vitesse d'avancement Vcur est supérieure au premier seuil S1 et pour une même altitude.

Ensuite, le procédé comporte une régulation, durant une étape STP2 et avec le système de régulation 55, voire le contrôleur 75 et possiblement avec le calculateur moteur 60 correspondant, du moteur actif EACT pour atteindre la vitesse de consigne Vcons.

Selon l'exemple précédent, le calculateur de gestion 78 applique à chaque instant une loi de régulation pour déterminer la vitesse de consigne Vcons, le calculateur de gestion 78 ou le calculateur moteur 60 du moteur actif en déduisant une consigne de vitesse NTL* pour la vitesse de rotation NTL de l'ensemble de puissance du moteur actif. Le calculateur moteur 60 asservit le doseur de carburant du moteur actif pour faire tendre la vitesse de rotation NTL mesurée avec le senseur de vitesse associé vers la vitesse de rotation de consigne NTL*.

La figure 2 présente un diagramme donnant la vitesse de consigne Vcons du rotor 5 en fonction de la vitesse d'avancement Vcur mesurée avec le senseur de vitesse 82. La vitesse de consigne Vcons est exprimée en pourcentage d'une vitesse de rotation de référence, et la vitesse d'avancement Vcur est exprimée en nœud (kts).

La courbe C1 illustre la loi par défaut et la courbe C2 la loi alternative.

Selon la figure 2, la loi par défaut Lawdef spécifie que la vitesse de consigne est égale :
- à une valeur maximale Vmax pour une vitesse d'avancement Vcur inférieure à un deuxième seuil S2, le deuxième seuil S2 étant inférieur au premier seuil S1,
- à une valeur minimale Vmin égale à une première valeur V1 pour une vitesse d'avancement Vcur supérieure au premier seuil S1,
- à une valeur qui décroit linéairement de la valeur maximale Vmax à la première valeur V1 pour une vitesse d'avancement Vcur qui croît du deuxième seuil S2 au premier seuil S1.

Dès lors, la loi alternative spécifie que la vitesse de consigne Vcons est égale à une valeur minimale Vmin égale à une deuxième valeur V2 en présence d'une vitesse d'avancement Vcur supérieure au premier seuil S1, la deuxième valeur V2 étant supérieure à la première valeur V1. Cette caractéristique permet d'éloigner la vitesse de rotation du rotor 5 d'une limite basse.

Eventuellement, la loi alternative spécifie que la vitesse de consigne Vcons est égale à
- à la valeur maximale Vmax pour une vitesse d'avancement Vcur inférieure au deuxième seuil S2,
- à une valeur qui décroît linéairement de la valeur maximale Vmax à la deuxième valeur V2 pour une vitesse d'avancement Vcur qui croît du deuxième seuil S2 au premier seuil S1.

Lorsque le mode de fonctionnement asymétrique est activé, le procédé peut comporter une régulation STPA du moteur actif EACT en faisant varier linéairement la vitesse de consigne de la première valeur V1 à la deuxième valeur V2 conformément à la flèche F1.

En revanche, lorsque le mode de fonctionnement asymétrique est désactivé, le procédé peut comporter une régulation STPR des moteurs 10 en faisant varier linéairement la vitesse de consigne de la deuxième valeur V2 à la première valeur V1 conformément à la flèche F2.

Selon un autre aspect, chaque loi peut prendre la forme d'une ou de plusieurs équations mises en œuvre par le contrôleur 75.

En outre, selon la figure 2 la première valeur V1 et la deuxième valeur V2 sont fixes.

Par suite, selon le procédé illustré par la figure 2, le procédé comporte la mesure avec le contrôleur 75 de la vitesse d'avancement courante Vcur avec le senseur de vitesse 82, puis la détermination de la vitesse de consigne avec le contrôleur en fonction de cette vitesse d'avancement courante Vcur, à l'aide de la loi par défaut lors du mode de fonctionnement collaboratif et de la loi alternative durant le mode de fonctionnement asymétrique, puis la régulation de chaque moteur actif en fonction de cette vitesse de consigne Vcons.

La figure 3 illustre à l'inverse une autre variante pour laquelle, la valeur minimale Vmin varie en fonction de l'altitude ou d'une plage d'altitudes.

Ainsi, la première valeur V1 et la deuxième valeur V2 dépendent de l'altitude.

Le procédé comporte alors la mesure avec le contrôleur 75 de l'altitude courante à l'aide du senseur d'altitude 83 et de la vitesse d'avancement courante Vcur avec le senseur de vitesse 82, et la détermination de la vitesse de consigne Vcons en fonction de l'altitude courante et de la vitesse d'avancement courante, à l'aide de la loi par défaut lors du mode de fonctionnement collaboratif et de la loi alternative durant le mode de fonctionnement asymétrique, puis la régulation de chaque moteur actif en fonction de cette vitesse de consigne Vcons.

La figure 3 illustre une loi par défaut prenant la forme de trois courbes C11, C12, C13 pour trois plages d'altitudes, et une loi alternative comprenant trois courbes respectives C21, C22, C23.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Procédé de régulation d'une vitesse de rotation d'un rotor (5) d'un giravion (1), ledit giravion (1) comprenant une installation motrice (2) ayant au moins deux moteurs (10) et une chaîne de transmission de puissance (25) entraînant en rotation le rotor (5), chaque moteur (10) ayant un ensemble de puissance (14) connecté à la chaîne de transmission de puissance (25), le giravion (1) comportant un système de régulation (55) qui régule chaque moteur (10) en fonction d'au moins une vitesse de consigne (Vcons) à atteindre par le rotor (5), le système de régulation (55) régulant lors d'un mode de fonctionnement asymétrique à un régime actif au moins un moteur actif (EACT) parmi les au moins deux moteurs (10) et mettant en veille au moins un moteur passif (EPAS) parmi les au moins deux moteurs (10), le système de régulation (55) régulant à un régime actif lesdits moteurs (10) lors d'un mode de fonctionnement collaboratif, le système de régulation (55) déterminant lors du mode de fonctionnement collaboratif ladite au moins une vitesse de consigne (Vcons) en appliquant une loi par défaut (Lawdef) donnant ladite vitesse de consigne (Vcons) en fonction au moins d'une vitesse d'avancement (Vcur) du giravion (1), ladite vitesse de consigne (Vcons) étant égale à une valeur minimale (Vmin) lorsque ladite vitesse d'avancement (Vcur) est supérieure à un premier seuil (S1),
**caractérisé en ce que** lors du mode de fonctionnement asymétrique, le procédé comporte : i) détermination (STP1) avec le système de régulation (55) de la vitesse de consigne en appliquant une loi alternative (lawasy) générant une vitesse de consigne supérieure à la vitesse de consigne générée par la loi par défaut (Lawdef) en présence d'une vitesse d'avancement (Vcur) supérieure au premier seuil (S1) et à la même altitude, et ii) régulation (STP2) dudit moteur actif (EACT) pour atteindre la vitesse de consigne (Vcons).

2. Procédé selon la revendication 1,
**caractérisé en ce que** pour une vitesse d'avancement (Vcur) inférieure à un deuxième seuil (S2), le deuxième seuil (S2) étant inférieur au premier seuil (S1), la vitesse de consigne est égale à une même valeur maximale (Vmax) selon la loi par défaut (Lawdef) et la loi alternative (lawasy).

3. Procédé selon la revendication 2,
**caractérisé en ce que** pour une vitesse d'avancement (Vcur) supérieure ou égale au deuxième seuil (S2) et inférieure ou égale au premier seuil (S1), la vitesse de consigne (Vcons) décroît linéairement de la valeur maximale (Vmax) à la valeur minimale (Vmin) selon la loi par défaut (Lawdef) et la loi alternative (lawasy).

4. Procédé selon l'une quelconque des revendications 1 à 3, **caractérisé en ce que** pour une vitesse d'avancement (Vcur) supérieure au premier seuil (S1), la vitesse de consigne est égale à la valeur minimale (Vmin) selon la loi par défaut (Lawdef) et la loi alternative (lawasy), la valeur minimale (Vmin) prenant une première valeur (V1) selon la loi par défaut (Lawdef) et une deuxième valeur (V2) selon la loi alternative (lawasy), la deuxième valeur (V2) étant supérieure à la première valeur (V1) à une même altitude.

5. Procédé selon la revendication 4,
**caractérisé en ce que** lesdites première valeur (V1) et deuxième valeur (V2) varient en fonction de l'altitude.

6. Procédé selon l'une quelconque des revendications 4 à 5, **caractérisé en ce que** :
- lorsque le mode de fonctionnement asymétrique est activé, le procédé comporte une régulation (STPA) du moteur actif en faisant varier linéairement la vitesse de consigne de la première valeur (V1) à la deuxième valeur (V2), et
- lorsque le mode de fonctionnement asymétrique est désactivé, le procédé comporte une régulation (STPR) des moteurs en faisant varier linéairement la vitesse de consigne de la deuxième valeur (V2) à la première valeur (V1).

7. Giravion (1), ledit giravion (1) comprenant une installation motrice (2) ayant au moins deux moteurs (10) et une chaîne de transmission de puissance (25) entraînant en rotation le rotor (5), chaque moteur (10) ayant un ensemble de puissance (14) connecté à la chaîne de transmission de puissance (25), le giravion (1) comportant un système de régulation (55) qui régule chaque moteur (10) en fonction d'au moins une vitesse de consigne à atteindre par le rotor (5), le système de régulation (55) régulant lors d'un mode de fonctionnement asymétrique à un régime actif au moins un moteur actif (EACT) parmi les au moins deux moteurs (10) et mettant en veille au moins un moteur passif (EPAS) parmi les au moins deux moteurs (10), le système de régulation (55) régulant à un régime actif lesdits moteurs (10) lors d'un mode de fonctionnement collaboratif, le système de régulation déterminant lors du mode de fonctionnement collaboratif ladite au moins une vitesse de consigne en appliquant une loi par défaut (Lawdef) donnant ladite vitesse de consigne en fonction au moins d'une vitesse d'avancement (Vcur) du giravion (1), ladite vitesse de consigne étant égale à une valeur minimale (Vmin) lorsque ladite vitesse d'avancement (Vcur) est supérieure à un premier seuil (S1),
**caractérisé en ce que** le système de régulation (55) est configuré pour mettre en œuvre le procédé selon l'une quelconque des revendications 1 à 6.

8. Giravion selon la revendication 7,
**caractérisé en ce que** le système de régulation (55) comporte un senseur de vitesse (82) mesurant une vitesse d'avancement (Vcur) du giravion (1).

9. Giravion selon l'une quelconque des revendications 7 à 8, **caractérisé en ce que** le système de régulation (55) comporte un senseur d'altitude (83) mesurant une altitude.
